# EUROPÄISCHE PATENTSCHRIFT

(11) **EP 0 986 955 B1**
(45) Veröffentlichungstag und Bekanntmachung des Hinweises auf die Patenterteilung: **02.04.2003**
(21) Anmeldenummer: 99115029.3
(22) Anmeldetag: 03.08.1999
(51) Int. Cl.: A01N 37/46, A01N 43/52

(54) **Glutathion-Konjugate als Signalmoleküle**
Conjugates of glutathione as signal molecules
Conjugués de glutathione comme molécules portant un signal

(30) Priorität: 17.09.1998 DE 19842663; 23.10.1998 DE 19849045
(43) Veröffentlichungstag der Anmeldung: 22.03.2000
(73) Patentinhaber: GSF-Forschungszentrum für Umwelt und Gesundheit GmbH, 85764 Oberschleissheim (DE)
(72) Erfinder: Schröder, Peter, Dr., 85551 Kirchheim (DE); Stampfl, Andreas, Dr., 85354 Freising (DE)
(74) Vertreter: Reinhard - Skuhra - Weise & Partner

(56) Entgegenhaltungen:
- WO-A-89/11795
- WO-A-96/26643
- US-A- 4 784 685
- DATABASE CROPU [Online] J.O.D.COLEMAN ET AL.: "Detoxification of xenobiotics in plant cells by glutathione conjugation and vacuolar compartmentalization: a fluorescent assay using monochlorbimane" retrieved from STN-INTERNATIONAL, accession no. 1997-85538 CROPU XP002125636 & PLANT CELL ENVIRON., Bd. 20, Nr. 4, 1997, Seiten 449-460,
- DATABASE CHEMABS [Online] CHEMICAL ABSTRACTS SERVICE, COLUMBUS, OHIO, US JABLONKAI I. ET AL.: "Glutathione and cysteine conjugates inhibit glutathione-S-transferase enzymes mediating GSH conjugation of the herbicide acetochlor" retrieved from STN-INTERNATIONAL, accession no. 128:98920 CA XP002125637 & BRIGHTON CROP PROT. CONF.--WEEDS, Bd. 2, 1997, Seiten 801-806,
- DATABASE CROPU [Online] SHIOTSUKI T. ET AL.: "Inhibition of Glutathione Transferase by S-Benzyl Glutathione Anologous to the Conjugate of Salegenin Cyclic Phosphate" retrieved from STN-INTERNATIONAL, accession no. 1990-85323 CROPU XP002125638 & PESTIC.BIOCHEM.PHYSIOL., Bd. 37, Nr. 2, 1990, Seiten 121-129,
- DATABASE CHEMABS [Online] CHEMICAL ABSTRACTS SERVICE, COLUMBUS, OHIO, US MIYAMOTO T. ET AL.: "Glutathione conjugates as the activated from of chalcones for glutathione-S-transferase inhibition" retrieved from STN-INTERNATIONAL, accession no. 121:76139 XP002125639 & J.PESTIC.SCI., Bd. 19, Nr. 1, 1994, Seiten 53-58,

## Beschreibung

Die Erfindung betrifft ein Verfahren, um die Entgiftungskapazität von Pflanzen für organische Schadstoffe und/oder Agrochemikalien zu steigern.

Pflanzen sind permanent Einwirkungen von Fremdstoffen ausgesetzt. Schadstoffe kommen aufgrund der allgemeinen Umweltbelastung praktisch ubiquitär vor, und zumindest im Freiland aufgezogene Pflanzen können einem derartigen Schadstoffeintrag nicht entkommen. Weiterhin sind insbesondere Nutzpflanzen dem Eintrag von Agrochemikalien ausgesetzt. All diese Schadstoffe und Agrochemikalien werden zumindest teilweise in die Pflanze aufgenommen und können dort akkumulieren. Insbesondere bei Nutzpflanzen, die später als Nahrungsmittel an Menschen oder Tiere verabreicht werden, ist eine möglichst geringe Belastung mit diesen Schadstoffen und Agrochemikalien von großer Bedeutung. Es wurde deshalb bereits in der Vergangenheit nach Wegen gesucht, um die Nutzpflanzen von Schadstoffen und Agrochemikalien zu entgiften.

Der wirkungsmechanismus zur Entgiftung von Pflanzen funktioniert über Glutathion-konjugat. Coleman et al. beschreiben in Plant, cell and Environment (1997) 20, 449-460, daß Xenobiotika in der Zelle mit Glutathion im Zytoplasma konjugiert und anschließ und in die vakuolen transportiert werden.

Insbesondere beim Herbizid-Einsatz wird versucht, die Entgiftungskapazität in Nutzpflanzen durch Antidots (Herbizid-Safener) und andere fördernde Agentien gegenüber der von Unkräutern zu erhöhen. In der landwirtschaftlichen Praxis wurden in der Vergangenheit Herbizid-Antidote mit häufig Herbizid analogen Strukturen eingesetzt, um die Entgiftungskapazität von Nutzpflanzen zu erhöhen. Der Wirkmechanismus ist jedoch nicht verstanden. Aus diesem Grund sind auch Antidot-Applikationen unspezifisch und kaum dosierbar.

Es ist deshalb eine Aufgabe der vorliegenden Erfindung, Signalmoleküle bereitzustellen, die die Entgiftungskapazität von Pflanzen für organische Schadstoffe und/oder Agrochemikalien steigern.

Diese Aufgabe wird erfindungsgemäß durch ein Verfahren gemäß Anspruch 1 gelöst, das dadurch gekennzeichnet ist, daß die mit den Schadstoffen und/oder Agrochemikalien kontaminierten Pflanzen mit einer wirksamen Menge eines Glutathion-Konjugats in Kontakt gebracht, die Konjugate zum Zellkern transportiert und dort akkumuliert werden, wobei sie als Signalmoleküle wirken, um hierdurch eine Induktion und/oder Steigerung der Aktivität pflanzlicher Entgiftungsenzyme in der Pflanzenzelle zu bewirken.

Durch das erfindungsgemäße Verfahren können spezifische Induktoren synthetisiert werden, die nicht erst in der Pflanze metabolisiert werden müssen, um ihre Wirksamkeit zu entfalten, sondern die gezielt die Entgiftungskapazität für organische Schadstoffe und Agrochemikalien in Pflanzen induzieren und steigern können.

Unter Konjugate werden erfindungsgemäß Verbindungen von Glutathion oder seinen Analoga mit Herbiziden, Herbizid-Antidots (Safener), Xenobiotika oder Naturstoffen, die je mit Glutathion konjugierbar sein müssen, als bevorzugte Gluthathion-Konjugate verstanden. Diese Substanzklassen werden nachfolgend näher erläutert.

### 1. SAFENER:

In der Vergangenheit wurden zahlreiche Safener entwickelt und angewendet. Der Wirkungsmechanismus ist in allen Fällen unbekannt. Beispiele für Safener sind:

Chloroacetamide, Thiocarbamate, Chlorpropionamide, Naphthopyranone, Dichlormethyl, Acetale, Oximether-Derivate, Thiazolcarboxylate, Phenylpyrimidine, Phenylpyrazole, Quinolinoxycarbonsäureester, Methylbenzylharnstoffe.

### Beispiele:

Benoxacor, Cloquintocet-mexyl, Cyometrinil (Concep I), Daimuron, Dichlormid Dipiperate, Dymron, Tenchlorazoleethyl, Fenclorim, Flurazole (Scree), Fluxofenim (Concep III) LAB-145138, MG-191, MON-13900, Naphthylsäureanhydrid (Protect), Oxabetrinil (Concep II).

### 2. HERBIZIDE:

### Glutathionkonjugierbare Herbizide sind:

Acetochlor, Acifluorfen, Alachlor, Atrazin,Benzo(a)pyren, Butachlor, Chlorpropham, Chlorimuronethyl, Chlorsulfuron, Dichlormethan, Dimetachlor, Dimethymetryn, Dimethenamid, EPTC, Fluorodifen, Metazachlor, Metolachlor, Metribuzin, Molinat, Pebulat, PCNB, Pretilachlor, Propachlor, Terbutryn, Tridiphan, Trisulfuronmethyl.

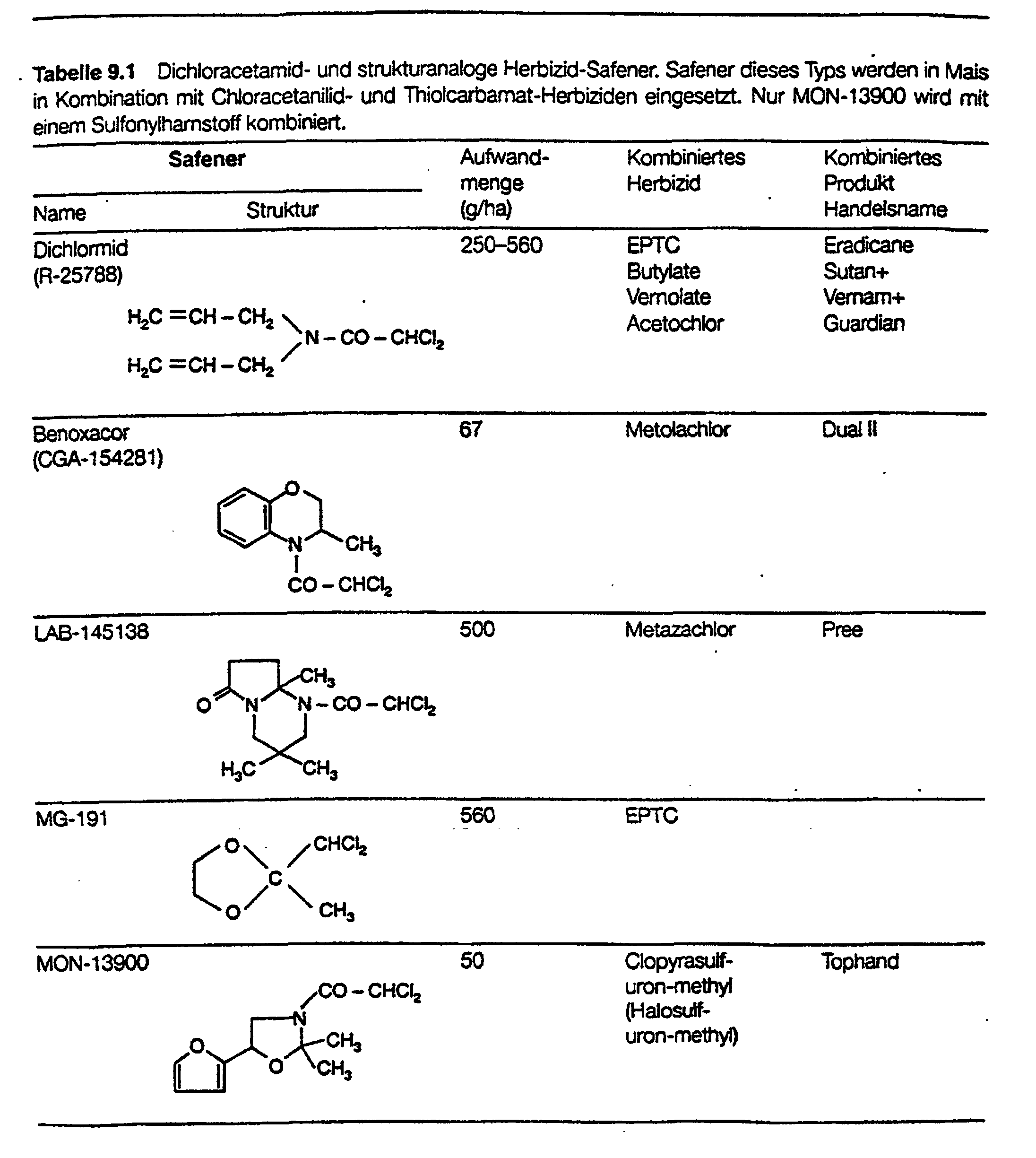

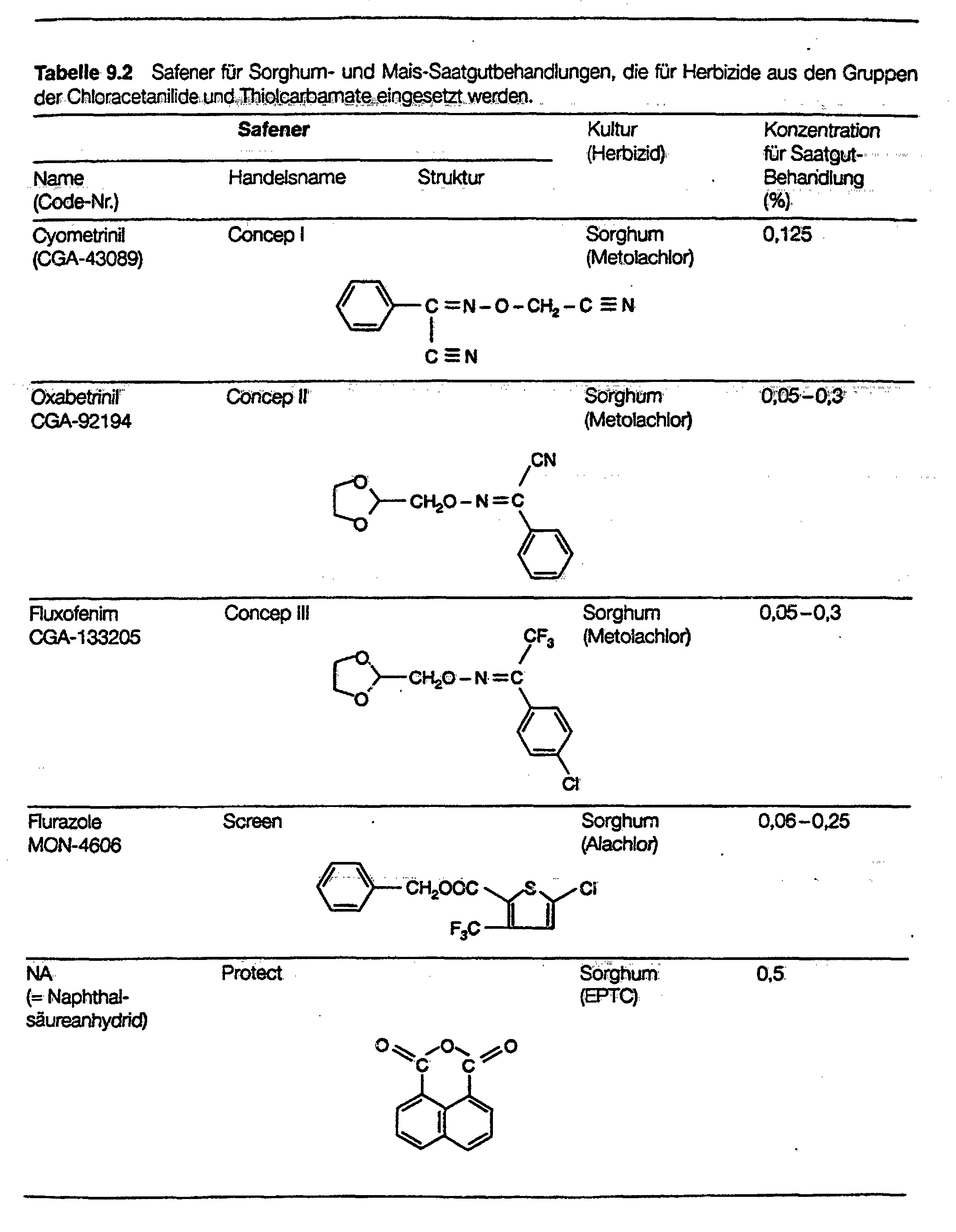

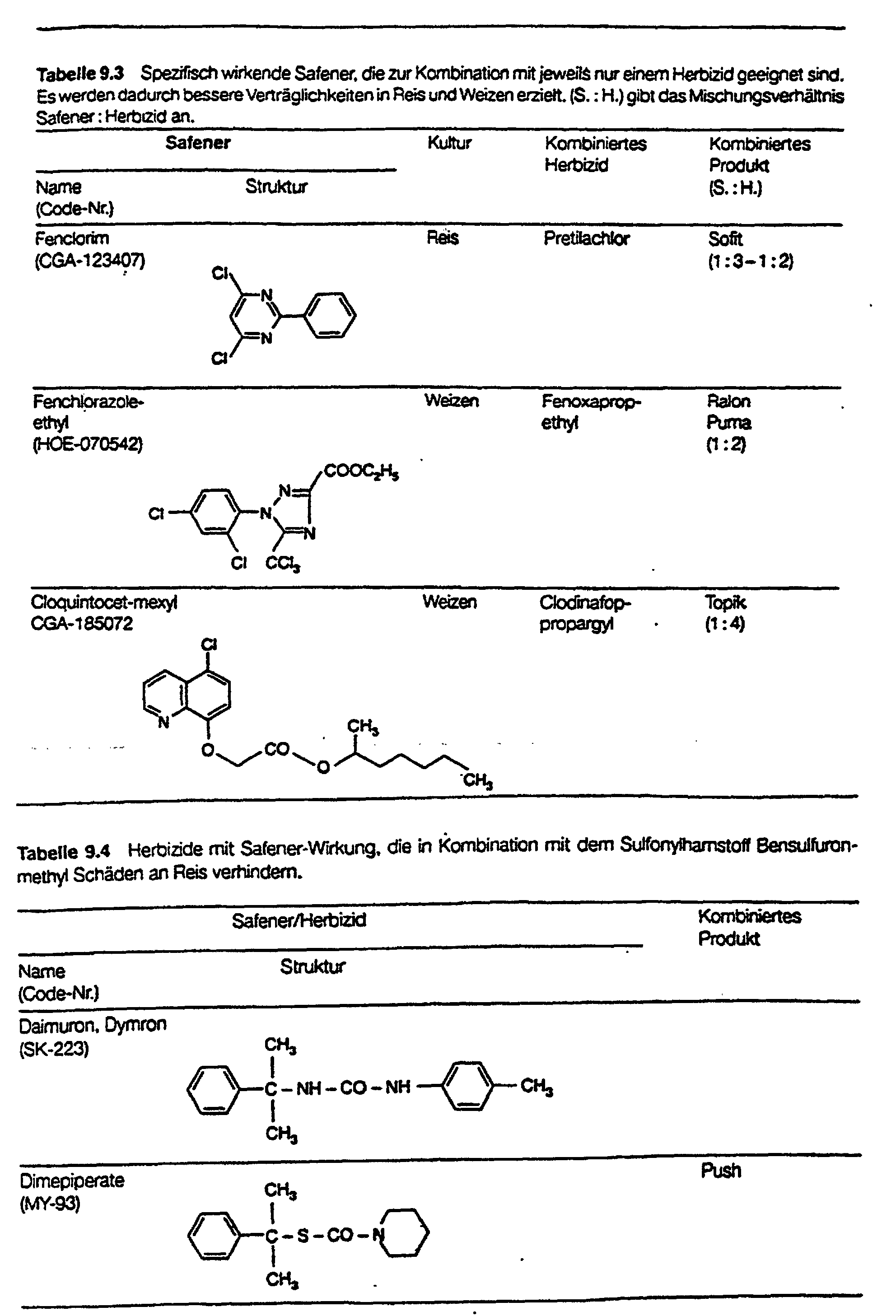

### 3. XENOBIOTIKA:

Zahlreiche Chlorbenzol-Derivate wie Dichlornitrobenzol, Chlordinitrobenzon, Nitrobenzoyl-Chlorid, Nitroaromate und Haloalkyl-Verbindungen wie Trichlorethen, Tetrachlorethen, Halone usw. können erfindungsgemäß mit Glutathion verknüpft werden.

### 4. NATURSTOFFE:

Verwendbar sind beispielsweise Konjugate mit Naturstoffen des sekundären Pflanzenstoffwechsels, vor allem aus der Klasse der Phenylpropanoide, beispielsweise der Zimtalkohole, der Cumarsäuren und ihrer Derivate (Cumarine und Hydroxycumarine) oder auch aus der Klasse der Flavonoide (z.B. Saponarin, Isovitexin).

Beispiele für Glutathion-Analoga sind:
- γ-L-Glutamyl-L-cysteinyl-β-alanin
- γ-L-Glutamyl-L-cysteinyl-β-serin
- Hydroxymethylglutathion

Das Verfahren zur Herstellung der erfindungsgemäßen Konjugate ist an sich bekannt. Eine Möglichkeit, um die erfindungsgemäßen Konjugate herzustellen, wird nachfolgend näher dargestellt. Die Erfindung ist jedoch nicht auf dieses spezielle Herstellungsverfahren beschränkt.

In einem geeigneten Puffersystem mit pH-Wert um 6,5 und geeigneter Ionenstärke (0,1-0,2 M) wird das Xenobiotikum / der Naturstoff in mM Konzentration in geeignetem Lösungsmittel (bis 5% EtOH, DMSO, DMF, Aceton) vorgelegt.. 10 - 20-facher Überschuß an H₂O bidest. gelöstem reduziertem Glutathion wird zugegeben.

Darauf folgt entweder eine Alkalisierung durch pH-Shift auf ca. pH 8, oder eine Inkubation mit einem Glutathion S-Transferase Totalextrakt aus Mais, Weizen oder Sojabohne bzw. käuflicher GST aus Ratten- bzw. Kaninchenleber (Sigma-Aldrich).

Die Testansätze werden für Stunden im Dunklen bei Raumtemperatur inkubiert. Die Reaktion wird durch Zugabe von 1% TCA gestoppt, danach erfolgt Ausschütteln des Konjugats durch Zugabe' desselben Volumens an Chloroform/Methylenchlorid (3:8, v/v). Phasentrennung wird durch kurze Zentrifugation etabliert; die Ausgangssubstanz verbleibt in der organischen Phase, Konjugate im Wässrigen. Die wässrige Phase wird abpipettiert und auf mit Acetonitril vorkonditionierte C18-(z.B. Sep-fak® Waters, o.ä.) Kartuschen aufgetragen. Elution mit 5-35% Acetonitril eluiert die Glutathionkonjugate. Die Konzentrate werden einrotiert oder zur Trockne eingedampft und bis zur Verwendung bei -20°C gelagert.

Die hergestellten Konjugate können zur gezielten Induktion der pflanzlichen Entgiftungsenzyme nach Lösung in einem geeigneten Lösungsmittel bzw. in einer gängigen Agrochemikalien-Formulierung eingesetzt werden. Der Auftrag auf die Pflanzen erfolgt gemäß den GLP-Richtlinien der BBA.

Die einzelnen Verbindungen werden dann auf den Induktionserfolg getestet. Dies geschieht dadurch, daß die Entgiftungsleistung in Standard-Testsystemen spektralphotometrisch oder durch HPLC bestimmt wird oder mittels molekularbiologischer Methoden die Transkription der entsprechenden Gene analysiert wird.

Erfindungsgemäß werden insbesondere Glutathion-S-Transferasen als pflanzliche Entgiftungsenzyme in ihrer Aktivität induziert bzw. gesteigert. Es ist jedoch auch möglich, daß andere pflanzliche Entgiftungsenzyme aktiviert werden. Hierzu gehören beispielsweise Sulfotransferasen, ATP-Sulfurylasen, Glutathion-S-Transferasen, O-Glucosyltransferasen, Esterasen, Peroxidasen, P-450-Monooxigenasen.

Die Glutathion-Konjugate werden in einer wirksamen Menge eingesetzt. Eine derartige wirksame Menge liegt beispielsweise im Bereich von 1-1000 µM, beispielsweise im Bereich von 10-500 µM. Das Aufbringen kann beispielsweise durch Aufsprühen oder Aufgießen erfolgen, so daß die Verbindungen mit der Pflanzenoberfläche in Kontakt gebracht werden.

Die Induzierbarkeit von Entgiftungsenzymen in Pflanzen und Tieren ist ein an sich bekanntes Phänomen, das bereits auf vielfältige Weise praktisch genutzt wird. So wird in Pflanzen etwa die Resistenz gegenüber Herbiziden durch unspezifische Antidote gesteigert, deren Wirkung auf einer Steigerung der Entgiftungskapazität beruht. Die Mechanismen, die zur Steigerung führen, sind weitestgehend unbekannt. Im Fall der P-450-Monooxigenasen sind bei Tieren spezifische Rezeptoren für Fremdstoffmoleküle (z.B. Barbiturate, PCB, PAH) bekannt, die nach Ankopplung des Fremdstoffs Signalmoleküle freisetzen, die spezifisch an die DNA binden. Für pflanzliche Systeme wurden jedoch analoge Mechanismen nicht beschrieben. Vielfach wird unspezifisch oxidativer Streß, verursacht durch den Fremdstoff selbst oder durch entsprechende Wirksamkeit von Abbauprodukten, als induzierendes Agens angenommen.

Die vorliegende Erfindung geht deshalb weit über die bisherigen Untersuchungen zur Mechanistik der Induzierbarkeit von Glutathion-Transferasen in Pflanzen hinaus. Somit konnte zum ersten Mal gezeigt werden, daß Konjugate mit Glutathion als Signalmoleküle wirken, die beispielsweise in der Lage sind, Enzyme des pflanzlichen Entgiftungsstoffwechsels zu aktivieren und zu induzieren. Erst durch die vorliegenden Ergebnisse wird dem Fachmann eine gezielte Lösung für das Problem der Entgiftung von Pflanzen von Agrochemikalien und organischen Schadstoffen bereitgestellt, nämlich die Verwendung eines Glutathion-Konjugats, das als Signalmolekül wirkt und zur Entgiftung von Pflanzen von organischen Schadstoffen und Agrochemikalien beiträgt.

Trotz langjähriger Forschungsarbeiten war bisher unbekannt, daß das Glutathion-Konjugat selbst eine Rolle als Signalmolekül einnimmt. Bisher ging es bei der Verwendung von Glutathion-Konjugaten in Inkubationsversuchen stets darum, die toxischen Ausgangssubstanzen und ihre möglicherweise induzierenden Eigenschaften zu vermeiden und stattdessen eine Substanzklasse anzuwenden, die in der Pflanze erst zum vermutlich aktiven Agens verwandelt werden muß. Durch die vorliegende Erfindung wird erstmals offenbart, daß die Glutathion-Konjugate, die enzymatisch entweder an der Kernhülle entstehen oder gezielt dorthin transloziert werden, direkt an der Signalkette beteiligt sind, die die Aktivierung von Resistenzgenen steuert. Bei Pflanzen waren derartige Mediatoren bislang unbekannt. Durch die vorliegenden Versuchsergebnisse können nunmehr gezielt Pflanzen von Agrochemikalien und Schadstoffen entgiftet werden.

Die vorliegende Erfindung wird nunmehr anhand von Beispielen für spezifische Glutathion-Konjugate beschrieben. Der Fachmann kann jedoch aufgrund seines Fachwissens und aufgrund der vorliegenden Beschreibung ohne weiteres die unteschiedlichsten Glutathion-Konjugate synthetisieren und in einem Screening-Verfahren pflanzliche Gewebe oder Zellkulturen darauf testen, ob die Konjugate die erfindungsgemäße Entgiftungskapazität aktivieren. Beispielsweise kann eine direkte Aktivitätsbestimmung oder eine Messung der Induktionsleistung durch molekularbiologische Methoden erfolgen. Aktive Konjugate werden hierdurch herausgefiltert, resynthetisiert und in Feldstudien und bei Ganzpflanzen weiter untersucht. Anschließend werden die Substanzen den üblichen Tests zur Registrierung von Agrochemikalien unterworfen.

Durch die nachfolgenden Versuche konnte gezeigt werden, daß Glutathion-Konjugate spezifisch pflanzliche Entgiftungsenzyme, beispielsweise Glutathion-S-Transferasen, aktivieren. Hierzu wurde ein fluoreszierendes Konjugat aus Glutathion und Monochlorbiman hergestellt. Durch diese Fluoreszenzmarkierung kann der Weg des Konjugats durch die Zelle verfolgt werden. Zeitstudien ergaben, daß nach Inkubation mit Monochlorbiman eine starke Fluoreszenz am Zellkern auftritt, bevor das Cytosol fluoresziert. Die Fluoreszenz (d.i. das Konjugat) verläßt in der Folge den Kern und konzentriert sich in späteren Stadien im Bereich der Vakuole. Mit der Fluoreszenzentwicklung ist eine transiente Erhöhung der enzymatischen Entgiftungskapazität in den Zellen verbunden, die offenbar auf einer de-novo-Synthese von Proteinen beruht. Aus diesem Grund können derartige Glutathion-Konjugate auch als Hormonanaloge bezeichnet und entsprechend verwendet werden. Aufgrund dieser Untersuchungsergebnisse eignen sich somit Glutathion-Konjugate als Signalmolküle im pflanzlichen Zellen, in die sie mit Hilfe geeigneter Lösungsmittel und/oder Formulierungshilfen einbringbar sind. Die Konjugate akkumulieren am Zellkern und bewirken dort eine rasche und transiente Erhöhung der Aktivität von GST oder anderer pflanzlicher Entgiftungsenzyme und der Entgiftungskapazität in Pflanzen. Es können durch die vorliegende Erfindung spezifische Induktoren verwendet werden, die nicht erst in der Pflanze metabolisiert werden müssen, um ihre Wirkung zu entfalten.

Die nachfolgenden Abkürzungen bedeuten:
- CDNB :: 1-Chlor-2,4-dinitrobenzol;
- DCNB :: 1,2-Dichlor-4-nitrobenzol;
- EPNP :: 1,2-Epoxy-3(p-nitrophenoxy)-propan;
- γ-GC :: γ-Glutamyl-cysteinyl-Rest;
- GS :: Glutathionyl-Rest;
- GSH :: Glutathion, reduziert;
- GST :: Glutathion-S-Transferase;
- MBB :: Monobromobiman;
- MCB :: Monochlorobiman;
- NBD-Cl :: 7-Chlor-4-nitrobenzo-2-oxy-1,3-diazol.

Das Ziel der nachfolgenden Untersuchungen war, die GST-abhängige Konjugatbildung und den Transport der Konjugate in den Zellen sichtbar zu machen und den Einfluß von Xenobiotika und ihrer jeweiligen Glutathion-Konjugate auf ihre Aktivität auf GST in Zwiebeln zu untersuchen.

Für verschiedene Xenobiotika wurde in Proteinextrakten aus epidermalen Gewebe von Zwiebeln eine GST-Aktivität gefunden. Die Aktivitäten waren über den Tag verteilt nicht konstant, sondern folgten einem diurnalen Rhythmus, der mit dem allgemeinen diurnalen Turnover von Protein verbunden war. Die Aktivität war sowohl in den Cytosol- als auch in den Mikrosomen-Fraktionen nachweisbar. CDNB- und MBB-Konjugation fand mit den höchsten Raten statt, wobei bei der MBB-Konjugation extrem hohe nicht enzymatische Raten festgestellt werden konnten. Im Gegensatz zu CDNB war eine MBB-Konjugation nur im Cytosol nachweisbar. Anders als für die Bedingungen im Cytosol war die Aktivität für die Konjugation von CDNB und DCNB in aus dem gleichen Gewebe extrahierten mikrosomalen Fraktionen gleich. EPNP wurde unter den vorliegenden Bedingungen durch die mit den Mikrosomen assoziierte GST mit den höchsten Raten konjugiert. Die MCB-Aktivitäten waren moderat und ausschließlich im Cytosol vorkommend, führten jedoch zur Bildung eines leuchtend fluoreszierenden Konjugats. Unter den in vitro angewandten Bedingungen fand nur eine langsame Konjugat-Bildung in Testsystemen ohne GST statt, während bei pH-Werten von über 7,6 ein signifikanter Anteil einer nicht-enzymatischen Bildung eines Glutathion-Konjugats stattfand.

Die Entwicklung der Fluoreszenz in epidermalen Zwiebelpräparationen in vivo wurde mikroskopisch untersucht. Die Fluoreszenzentwicklung fand innerhalb weniger Minuten nach Inkubation der Epidermisstreifen mit MCB auf, und man fand, daß die Fluoreszenz beinahe gleichzeitig im Cytosol nahe an der Zellgrenze und an der Kernhülle der Epidermiszellen beginnt. Bei Beobachtung der Fluoreszenzentwicklung im Kern, in den Vakuolen und im Cytosol zeigte sich, daß die Fluoreszenz im Cytosol und in den Vakuolen den gleichen Anstieg aufwies, was am wahrscheinlichsten darauf zurückzuführen ist, daß die Cytosol-Fluoreszenz in die Vakuole ausstrahlte. Nach drei Minuten überstieg die Kernfluoreszenz die Cytosol-Fluoreszenz signifikant. Interessanterweise nahm nach 10 Minuten bzw. 15 Minuten die Fluoreszenz im Cytosol und im Kern ab, während in der Vakuole eine leuchtende Fluoreszenz auftrat. Diese ist gekennzeichnet durch eine steile Zunahme der Fluoreszenzkurve. Am Ende der Versuche waren die Epidermiszellen weiterhin am Leben, zeigten eine Plasmazirkulation und wiesen eine leichte Gesamtfluoreszenz mit leuchtenden Höfen im Kern und in den Vakuolen auf. Die allgemeine Fluoreszenz ist wahrscheinlich auf einen Transport und eine bevorzugte Verteilung des Konjugats in die Vakuole der Zellen zurückzuführen, was auch durch isolierte Vakuolen gezeigt werden konnte.

Auf dem enzymatischen Niveau führte die Inkubation von epidermalen Zellen (Epidermiszellen) aus Zwiebeln mit MCB zu schnellen und drastischen Veränderungen in der GST-Aktivität. Die größten Effekte wurden bei Konzentrationen von 10 bis 50 µM an Xenobiotika beobachtet. Nach 45 Minuten Inkubation mit 10 µM und 50 µ MCB betrug die GST-Aktivität für CDNB das 1,3- bzw. 5,1-fache derjenigen von Kontrollgeweben. In ähnlicher Weise nahm die Aktivität für die Konjugation von NBD-Cl deutlich zu. Jedoch verschwand die induktive Wirkung der Konjugatgabe bei Konzentrationen von etwa 50 µM. Die DCNB-Konjugation wurde umgekehrt beeinflußt. Transstilbenoxid, zugegeben in Konzentrationen von 10 und 50 µM, bewirkte eine geringe Induktion von CDNB-, DCNB- und NHBD-Cl-Konjugationsraten. Die DCNB-Konjugationsrate fiel bereits bei 50 µM und eine 50%-ige Inhibierung aller Aktivitäten trat bei Konzentrationen von 100 µM auf.

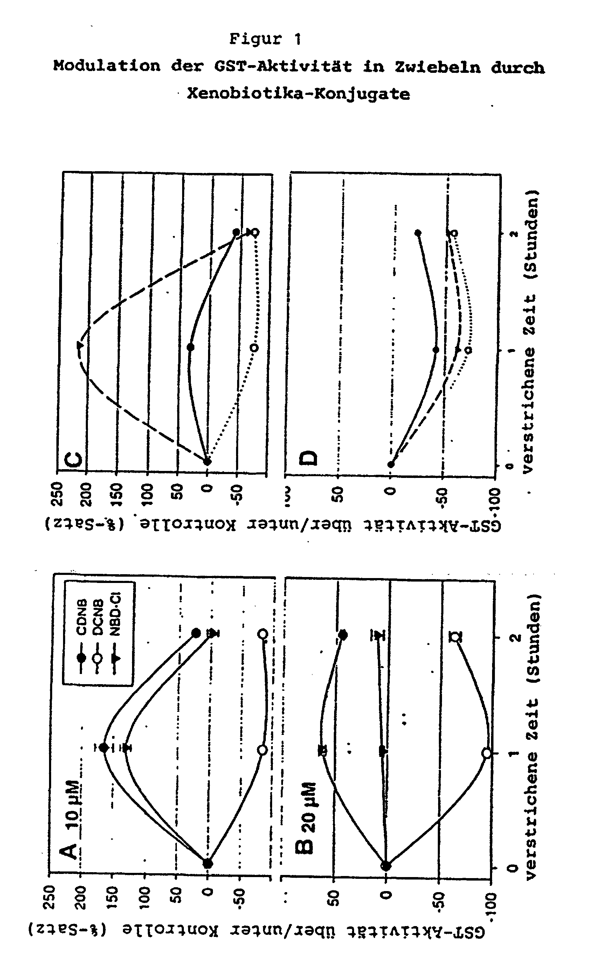

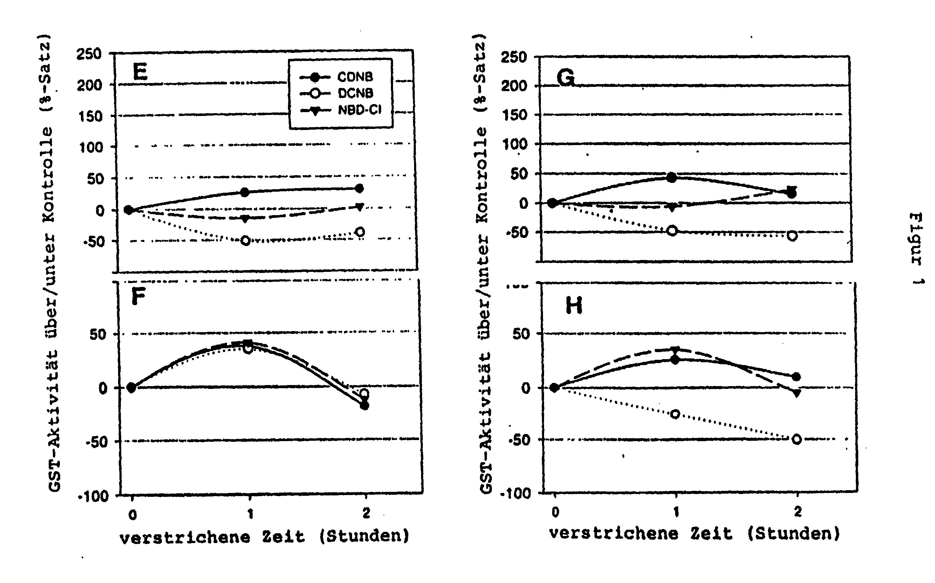

In Zeitverlaufs-Untersuchungen unter Verwendung der Biman-GSund der γGC- oder Chlornitrobenzol-GS und -γGC-Konjugate als Induktoren der GST von Zwiebeln konnten die beschriebenen Effekte näher analysiert werden. Die Figur 1 zeigt die Konsequenzen der Verabreichung von Konjugaten mit Xenobiotika an geschälte Zwiebel-Epidermis-Zellschichten. Das Glutathion-Konjugat von Chlorbiman beeinflußte die GST-Aktivität innerhalb einer Stunde stark und führte zu einer Verdoppelung der Konjugationsraten von CDNB und NBD-Cl (Figuren la, b). Zwei Stunden nach Verabreichung verlor sich jedoch der Effekt. Durch die Verabreichung des Biman-GS-Konjugats wurde die DCNB-Konjugation stark und irreversibel inhibiert. Höhere Konzentrationen des Konjugats bewirken interessanterweise nicht die gleichen oder stärkeren Effekte auf CDNB- und NBD-Cl-Konjugation; jedoch wurde die DCNB-Aktivität um 100% inhibiert (Figur 1b).

Chlordinitrobenzol-GS bewirkte eine Induktion um fast 200% der NBD-Cl-Konjugation (Figuren lc, d), während zur gleichen Zeit die CDNB-Konjugation unverändert blieb und die DCNB-Konjugation um 50% inhibiert wurde. Die Verabreichung von 20 µM Konjugat bewirkte nur geringere Effekte (Figur ld). Im allgemeinen führten γGC-Konjugate von Biman als auch von CDNB nicht zu den dramatischen Effekten, die nach Verabreichung der jeweiligen Glutathion-Konjugate beobachtet wurden, mit der Ausnahme einer signifikanten Inhibierung der DCNB-Konjugation (Figuren 1E-H).

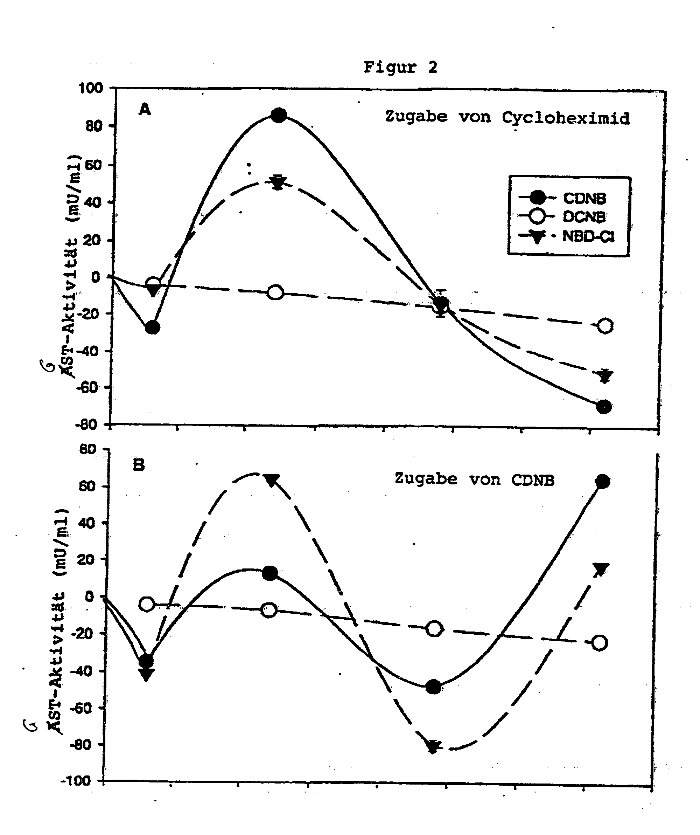

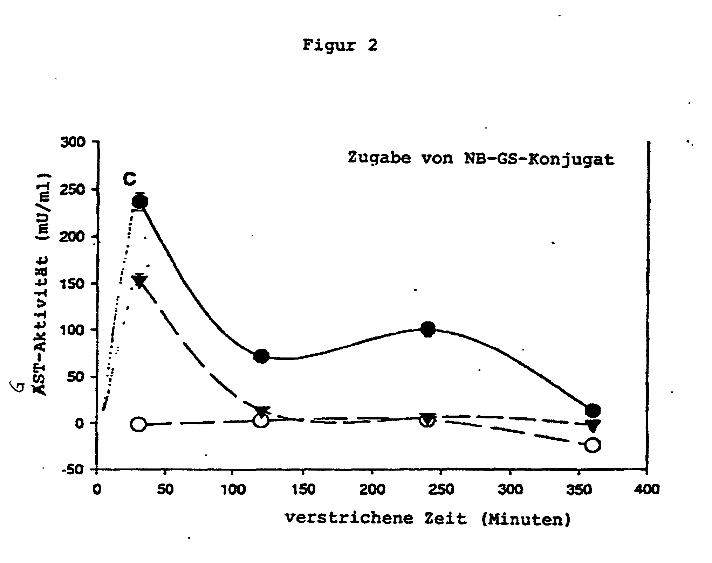

Die transienten Einflüsse auf die GST-Aktivität, die in der Figur 1 gezeigt sind, wurden weiter untersucht. Wenn Zwiebelepidermis 100 µM Cycloheximid ausgesetzt wurde, das ursprünglich als Kontrolle zur Inhibierung der de-novo-Synthese von GST entwickelt worden war, konnten innerhalb der ersten zwei Stunden des Versuchs signifikante und transiente Steigerungen der CDNB- und NBD-Cl-Konjugation beobachtet werden. Diese Steigerungen betrugen beinahe 100% der Kontrollwerte, verloren sich jedoch nach 3,5 Stunden. Nach diesem Punkt wurden GST-Aktivitätsverluste beobachtet (Figur 2A).

Bei Zugabe von CDNB zum epidermalen Zwiebelgewebe wurde der gleiche transiente Effekt mit einer hohen Aktivität nach zwei Stunden und ein Aktivitätsverlust nach einer zusätzlichen Stunde beobachtet; nach vier Stunden jedoch konnte eine erneute Zunahme der GST-Aktivität beobachtet werden (Figur 2B). Die Zugabe von Nitrobenzyl-Glutathion, einem kommerziell erhältlichen Glutathion-Konjugat, bewirkte starke Zunahmen der GST-Aktivität innerhalb der ersten 45 Minuten des Experiments und eine konstante Abnahme der GST-Aktivität in Bezug auf die Kontrollwerte während der nachfolgenden sechs Stunden (Figur 2C). Bei keiner der unterschiedliehen Zeituntersuchungen änderte sich die DCNB-Aktivität signifikant.

Die Verabreichung von Cycloheximid zusammen mit entweder CDNB oder Nitrobenzyl-Glutathion führte zu den gleichen Veränderungen in den GST-Aktivitätsmustern über die Zeit. Die vorher beobachtete transiente Stimulation innerhalb der ersten Phase des Versuchs (0 bis 2 Stunden) ging verloren; es konnte jedoch eine starke transiente Zunahme der GST-Aktivitäten für CDNB- und NBD-Cl-Konjugation nach vier Stunden beobachtet werden.

Aus diesen Untersuchungen und aufgrund des Ergebnisses, das zeigte, daß aufgrund der Glutathion-Konjugat-Akkumulation des Xenobiotikums Chlorbiman in der Kernhülle oder im Kern eine Fluoreszenzentwicklung auftrat, kann geschlossen werden, daß Glutathion-Könjugate als Signalmoleküle zur Stimulation der Aktivität pflanzlicher Entgiftungsenzyme, insbesondere der Aktivität vond GST, einsetzbar sind.

## Patentansprüche

1. Verfahren zur Steigerung der Entgiftungskapazität von Pflanzen für organische Schadstoffe und/oder Agrochemikalien,
**dadurch gekennzeichnet,**
**daß** die mit den Schadstoffen und/oder Agrochemikalien kontaminierten Pflanzen mit einer wirksamen Menge eines Glutathion-Konjugats bzw. eines Glutathion-Analoga-Konjugats in Kontakt gebracht, die Konjugate zum Zellkern transportiert und dort akkumuliert werden, wobei sie als Signalmoleküle wirken, um hierdurch eine Induktion und/oder Steigerung der Aktivität pflanzlicher Entgiftungsenzyme in der Pflanzenzelle zu bewirken.

2. Verfahren nach Anspruch 1,
**dadurch gekennzeichnet,**
**daß** als Konjugate Konjugate von Herbiziden, Herbizid-Antidots (Safener), Xeno-biotika und Naturstoffen, die je mit Gluthathion konjugierbar sein müssen, mit Glutathion eingesetzt werden.

3. Verfahren nach Anspruch 1 oder 2,
**dadurch gekennzeichnet,**
**daß** als Glutathion Glutathion-Analoga eingesetzt werden.

4. Verfahren nach einem oder mehreren der vorhergehenden Ansprüche,
**dadurch gekennzeichnet,**
**daß** die Aktivität von Sulfotransferasen, ATP-Sulfurylasen, Glutathion-S-Transferasen, O-Glucosyltransferasen, Esterasen, Peroxidasen, P-450-Monooxigenasen als pflanzliche Entgiftungsenzyme induziert und/oder gesteigert wird.

5. Verfahren nach einem oder mehreren der vorhergehenden Ansprüche,
**dadurch gekennzeichnet,**
**daß** die Glutathion-Konjugate in einer Menge von 1 bis 1000 µM, bevorzugt 10 - 500 µM, eingesetzt werden.

6. Verfahren nach einem oder mehreren der vorhergehenden Ansprüche,
**dadurch gekennzeichnet,**
**daß** die Glutathion-Konjugate durch Aufsprühen oder Aufgießen mit der Oberfläche der Pflanze in Kontakt gebracht werden.

7. Verwendung von Glutathion-Konjugaten als Signalmoleküle zur Induktion und/oder zur Steigerung der Aktivität von pflanzlichen Entgiftungsenzymen, wobei durch den Transport der Konjugate zum Zellkern und ihre Akkumulation im Zellkern die Entgiftungskapazität von mit organischen Schadstoffen und/oder Agrochemikalien kontaminierten Pflanzen gesteigert wird.

## Claims

1. A method of increasing the detoxification capacity of plants for organic pollutants and/or agrochemicals
**characterized in that**
the plants contaminated with pollutants and/or agrochemicals are contacted with an effective amount of a glutathione conjugate or a glutathione-analogue conjugate, the conjugates are transported to the cell nucleus and are accumulated there, whereby they function as signal molecules, and thus cause an induction and/or increase of the activity of plant detoxification enzymes in the plant cell.

2. A method according to claim 1,
**characterized in that**
as said conjugates, conjugates of herbicides, herbicide antidots (safeners), xeno-biotica and natural products, which each have to be conjugable with glutathione, with glutathione are used.

3. A method according to claim 1 or 2,
**characterized in that**
glutathione-analogues are used as said glutathione.

4. A method according to one or more of the preceding claims,
**characterized in that**
the activity of sulfotransferases, ATP-sulfurylases, glutathione-S-transferases, O-glucosyltransferases, esterases, peroxidases, P-450-monooxigenases as said plant detoxification enzymes is induced and/or increased.

5. A method according to one or more of the preceding claims,
**characterized in that**
the glutathione conjugates are used in an amount of 1 to 1000 µM, preferably 10 to 500 µM.

6. A method according to one or more of the preceding claims,
**characterized in that**
said glutathione conjugates are contacted with the surface of the plant by spraying or pouring.

7. Use of glutathione conjugates as signal molecules for the induction and/or increase of the activity of plant detoxification enzymes, wherein by the transport of the conjugates to the cell nucleus and their accumulation in the cell nucleus, the detoxification capacity of plants which are contaminated with organic pollutants and/or agrochemicals is increased.

## Revendications

1. Procédé d'accroissement de la capacité de décontamination de plantes pour polluants organiques et/ou produits phytosanitaires, **caractérisé en ce que** les plantes contaminées par les polluants et/ou les produits phytosanitaires sont mises en contact avec une quantité efficace d'un conjugué de glutathion ou d'un conjugué analogue du glutathion, les conjugués sont transportés jusqu'au noyau cellulaire et s'y accumulent, pour agir comme molécule-signal afin de susciter de la sorte une induction et/ou un accroissement de l'activité d'enzymes décontaminantes végétales dans la cellule de la plante.

2. Procédé selon la revendication 1, **caractérisé en ce qu'**on utilise comme conjugués des conjugués d'herbicides, d'agents de protection des plantes, de xénobiotiques et de corps naturels respectivement susceptibles d'être conjugués avec le glutathion, en association avec du glutathion.

3. Procédé selon la revendication 1 ou 2, **caractérisé en ce qu'**on utilise comme glutathion des analogues du glutathion.

4. Procédé selon l'une ou plusieurs de revendications précédentes, **caractérisé en ce que** l'activité est induite et/ou accrue par des sulfotransférases, des ATP-sulfurylases, des glutathion-S-transférases, des O-glucosyltransférases, des estérases, des peroxydases et des monooxygénases P-450 comme enzymes de décontamination végétales.

5. Procédé selon l'une ou plusieurs des revendications précédentes, **caractérisé en ce que** les conjugués de glutathion sont utilisés en quantité de 1 à 1000 µmoles, de préférence de 10 à 500 µmoles.

6. Procédé selon l'une ou plusieurs des revendications précédentes, **caractérisée en ce que** les conjugués de glutathion sont mis en contact avec la surface des plantes par pulvérisation ou perolation.

7. Utilisation de conjugués de glutathion comme molécule-signal pour induire et/ou accroître l'activité d'enzymes de décontamination végétales, de sorte que, par transport des conjugués jusqu'au noyau cellulaire et leur accumulation dans celui-ci, la capacité de décontamination de plantes contaminées par des polluants organiques et/ou des produits phytosanitaires soit augmentée.
